# EUROPÄISCHE PATENTSCHRIFT

(11) **EP 1 881 319 B1**
(45) Veröffentlichungstag und Bekanntmachung des Hinweises auf die Patenterteilung: **14.09.2011**
(21) Anmeldenummer: 06015139.6
(22) Anmeldetag: 20.07.2006
(51) Int. Cl.: G01N 21/47, G01N 21/51

(54) **Vorrichtung und Verfahren zur Messung der Lichtstreuung**
Device and method for measuring light dispersion
Procédé et dispositif destinés à mesurer la diffusion de la lumière

(43) Veröffentlichungstag der Anmeldung: 23.01.2008
(73) Patentinhaber: SICK Engineering GmbH, 01458 Ottendorf-Okrilla (DE)
(72) Erfinder: Melcher, Uwe, 01458 Ottendorf-Okrilla (DE)
(74) Vertreter: Patentanwälte Westphal, Mussgnug & Partner

(56) Entgegenhaltungen:
- EP-A- 1 087 352
- EP-A1- 0 047 049
- EP-A2- 0 664 445
- EP-A2- 0 880 118
- DE-A1- 2 121 088
- GB-A- 2 412 166
- US-A- 4 372 683

## Beschreibung

Die Erfindung betrifft eine Vorrichtung zur Messung der Lichtstreuung gemäß dem Oberbegriff des Patentanspruchs 1 und ein Verfahren zur Überprüfung einer Vorrichtung zur Messung der Lichtstreuung gemäß Patentanspruch 16.

Bekannt sind Vorrichtungen zur Messung der Lichtstreuung an einem Fluid, welche einen Lichtsender und einen Lichtdetektor aufweisen. Der Lichtsender weist eine erste optische Achse und der Lichtdetektor eine zweite optische Achse auf, wobei zur Messung der Lichtstreuung der Lichtsensor und der Lichtdetektor derart zueinander angeordnet sind, dass die erste und die zweite optische Achse in einem Winkel zueinander angeordnet sind, wobei sich die erste und die zweite optische Achse in einem Messvolumen schneiden, in welches der von dem Lichtsender ausgesandte Lichtstrahl einfällt. In der Messposition kann in dem Lichtdetektor das an dem in dem Messvolumen vorhandene Fluid gestreute Licht detektiert werden.

Um den Lichtdetektor und dessen Empfangsoptik überprüfen zu können, beispielsweise um die Verschmutzung der Empfangsoptik detektieren zu können, ist es bekannt, den Lichtdetektor in eine Prüfposition zu verfahren. In dieser verlaufen in der Regel die erste und die zweite optische Achse parallel zueinander. Der Lichtdetektor wird somit direkt in den von dem Lichtsender ausgesandten Lichtstrahl verfahren, so dass in dieser Position der volle Lichtstrahl von dem Lichtdetektor detektiert werden sollte. Ist die Empfangsoptik verschmutzt, wird das erwartete Signal entsprechen abgeschwächt, woraus auf den Grad der Verschmutzung geschlossen werden kann.

Um ein besseres Bild der Verschmutzung der Empfangsoptik oder des Lichtdetektors zu erhalten, ist es auch bekannt, den Lichtdetektor durch den direkten von dem Lichtsender ausgesandten Lichtstrahl zu fahren, um die Empfangsoptik abzuscannen. Die einfachste Möglichkeit des Verfahrens einerseits in die unterschiedlichen Prüfpositionen und andererseits zurück in die Messposition besteht darin, den Lichtdetektor lediglich auf einer Kreisbahn zu verschwenken, wie es z.B. aus der GB-A-2 412 166 bekannt ist. Dabei wird allerdings der Lichtdetektor derart durch den von dem Lichtsender ausgesandten Lichtstrahl verschwenkt, dass die optische Achse des Lichtdetektors gegen die optische Achse des Lichtsenders verkippt und nur in einer einzigen Position, nämlich wenn die erste und die zweite optische Achse zusammenfallen, parallel zueinander verlaufen. Aufgrund der Verkippung der optischen Achsen gegeneinander wird jedoch ein verfälschtes Ergebnis über eine eventuelle Verschmutzung der Empfangsoptik erhalten.

Ziel ist es daher, den Lichtdetektor möglichst derart durch den direkten vom Lichtsender ausgesandten Lichtstrahl zu verfahren, dass die zweite optische Achse des Lichtdetektors möglichst parallel zu der ersten optischen Achse des Lichtsenders verläuft. Dazu ist es bekannt, den Lichtdetektor an dem freien Ende einer Blattfeder anzuordnen, welche im Wesentlichen parallel zu der ersten optischen Achse verläuft und welche derart lang ausgebildet ist, dass eine geringe Bewegung des freien Endes der Blattfeder zu einer Verschiebung des Lichtdetektors durch den von dem Lichtsender ausgesandten Lichtstrahl führt. Um den Lichtdetektor in die Messposition zu verkippen, ist der Lichtdetektor über eine Schräge an der Blattfeder befestigt, gegen welche mit einem Schieber derart geschoben werden kann, dass sich das freie Ende der Blattfeder derart über eine Stütze abknickt, dass der Lichtdetektor in die Messposition verschwenkt wird. Bei dem Überprüfungsprozess bewegt sich der Lichtdetektor jedoch auch in diesem Fall auf einer Kreisbahn, wenn auch mit vergleichsweise großem Radius, so dass die zweite optische Achse weiterhin nur in einer Position parallel zu der ersten optischen Achse verläuft. Durch den vergrößerten Radius verringert sich der Einfluss der Messungenauigkeiten, wird jedoch nicht vollständig eliminiert. Zudem unterliegt die Blattfeder den Wechselbelastungen, so dass die Blattfeder ermüden kann und im schlimmsten Falle bricht, was zu einem Funktionsausfall der Vorrichtung führt.

Die Aufgabe der Erfindung besteht daher darin, eine Vorrichtung zur Messung der Lichtstreuung bereitzustellen, bei welcher der Lichtdetektor zwischen einer Messposition und wenigstens einer Prüfposition derart verfahren werden kann, dass eine möglichst genaue Überprüfung des Lichtdetektors möglich ist. Weiterhin besteht die Aufgabe darin, ein Verfahren zur möglichst genauen Überprüfung des Lichtdetektors anzugeben.

Die Aufgabe der Erfindung wird gelöst durch eine Vorrichtung zur Messung der Lichtstreuung mit den Merkmalen des Patentanspruchs 1 und ein Verfahren zur Überprüfung einer Vorrichtung zur Messung der Lichtstreuung mit den Merkmalen des Patentanspruchs 16.

Vorteilhafte Ausgestaltungen und Weiterbildungen der Erfindung sind in den Unteransprüchen angegeben.

Erfindungsgemäß weist die Vorrichtung zur Messung der Lichtstreuung eine Zwangskurve auf, entlang derer der Lichtdetektor derart geführt ist, dass er in einem ersten Abschnitt der Zwangskurve senkrecht zur ersten optischen Achse verfahrbar ist, wobei die zweite optische Achse parallel zur ersten optischen Achse verläuft, und wobei der Lichtdetektor in einem zweiten Abschnitt in die Messposition überführbar ist. Die Zwangskurve legt somit die Bewegung des Lichtdetektors fest und sorgt dafür, dass der Lichtdetektor im Rahmen der Messgenauigkeiten exakt senkrecht zu der ersten optischen Achse des Lichtsenders verfahren werden kann, wobei die zweite optische Achse im Rahmen der Messgenauigkeiten parallel zur ersten optischen Achse verläuft. Dadurch wird gewährleistet, dass der Lichtdetektor und der Lichtsender exakt zueinander ausgerichtet sind, so dass der Lichtdetektor und gegebenenfalls die Empfangsoptik exakt auf Verschmutzungen überprüft werden kann, während der Lichtdetektor durch den Lichtstrahl des Lichtsenders gefahren wird. Die Zwangskurve weist weiterhin einen zweiten Abschnitt auf, welcher derart ausgebildet ist, dass der Lichtdetektor auf dem zweiten Abschnitt in die gewünschte Messposition gefahren wird und automatisch in dem gewünschten Winkel zu der optischen Achse des Lichtsenders ausgerichtet ist. Die Zwangskurve legt somit die Bewegung im Rahmen der Messgenauigkeiten exakt fest und unterliegt dabei keinen Ermüdungserscheinungen wie beispielsweise eine Blattfeder. Dadurch ist gewährleistet, dass auch bei häufigem Gebrauch ein zuverlässiges Verfahren des Lichtdetektors zwischen der Messposition und den Prüfpositionen während des Prüfprozesses wiederkehrend in gewünschter Genauigkeit ermöglicht wird.

Bei einer vorteilhaften Weiterbildung der Erfindung ist der erste Abschnitt der Zwangskurve und der zweite Abschnitt der Zwangskurve als Gerade ausgebildet, welche in einem Winkel zueinander stehen. Dadurch wird der Lichtdetektor beim Prüfprozess in einer linearen Bewegung in die gewünschten Positionen gefahren und somit auch exakt senkrecht in einer linearen Bewegung durch den Lichtstrahl gefahren. Die beiden Abschnitte der Zwangskurve stehen deshalb im Winkel zueinander, um den Lichtdetektor in der Messposition derart auszurichten, dass der Lichtdetektor im Winkel zu der ersten optischen Achse des Lichtsenders steht und somit das in dem Messvolumen gestreute Licht detektieren kann. Um eine exakte Ausrichtung des Lichtdetektors zu gewährleisten, entspricht vorzugsweise der Winkel zwischen dem ersten und dem zweiten Abschnitt der Zwangskurve dem Winkel zwischen der ersten und der zweiten optischen Achse in der Messposition.

Vorzugsweise weist der Lichtdetektor eine Empfangsoptik auf, welche auf das Messvolumen, besonders bevorzugt auf den Schnittpunkt zwischen der ersten optischen Achse und der zweiten optischen Achse in der Messposition fokussiert ist. Dadurch wird das in den Messvolumen gestreute Licht optimal auf den Lichtdetektor fokussiert.

Erfindungsgemäß weist der erste Abschnitt der Zwangskurve eine derartige Länge auf, dass der Lichtdetektor entlang dem ersten Abschnitt derart senkrecht zu der ersten optischen Achse des Lichtsenders verfahrbar ist, dass beim Verfahren der von dem Lichtsender ausgesandte Lichtstrahl einen Durchmesser der Empfangsoptik des Lichtdetektor vollständig überstreichen kann. Nur so wird gewährleistet, dass die gesamte Empfangsoptik auf eine Verschmutzung hin überprüft wird und nicht nur ein Ausschnitt der Empfangsoptik von dem von dem Lichtsender ausgesandten Lichtstrahl erfasst wird.

Bei einer besonders vorteilhaften Ausgestaltung der Erfindung sind Mittel vorgesehen, welche den Lichtdetektor an die Zwangskurve andrücken oder heranziehen kann. Auf diese Weise ist gewährleistet, dass in jeder Position des Lichtdetektors der Lichtdetektor an der Zwangskurve anliegt und somit exakt der durch die Zwangskurve vorgegebenen Bewegung folgt. Beispielweise kann der Lichtdetektor durch eine Zug- oder Druckfeder an die Zwangskurve angedrückt oder herangezogen werden, so dass in jeder Position der Lichtdetektor an der Zwangskurve aufliegt und somit in der vorgegebenen Position steht.

Um den Lichtdetektor entlang der Zwangskurve führen zu können, ist der Lichtdetektor vorzugsweise auf einem Schlitten angeordnet, welcher entlang der Zwangskurve verschiebbar oder verfahrbar ist. Der Schlitten kann beispielsweise gegen die Reibung über die Zwangskurve gezogen oder geschoben werden. Vorzugsweise weist der Schlitten jedoch Rollen auf, auf welchen der Schlitten entlang der Zwangskurve rollen kann. Dadurch wird die Kraft, welche nötig ist, um den Schlitten aus einer Position in eine andere Position zu überführen, verringert.

Besonders bevorzugt ist der Lichtdetektor oder gegebenenfalls der Schlitten mittels eines Riemenantriebs oder eines Seilzugs entlang der Zwangskurve bewegbar. Der Riemenantrieb kann über einen Motor, welcher in beide Drehrichtungen drehen kann, angetrieben-werden, so dass der Lichtdetektor aus der Messposition in die Prüfpositionen und wieder zurück verfahren werden kann. Der Seilzug kann derart ausgebildet sein, dass entweder der Schlitten mit Hilfe des Seilzugs in eine Richtung über einen Motor angetrieben werden kann und die Rückbewegung mit Hilfe einer Feder, die bei der Hinbewegung gespannt wird, ausgeführt werden kann. Alternativ kann auch ein Seilzug verwendet werden, der in zwei Richtungen über einen Motor angetrieben wird.

Vorzugsweise ist die Lichtquelle als Laser ausgebildet, um einen intensiven gebündelten Lichtstrahl zu erhalten. Der Lichtdetektor ist vorzugsweise als Photodiode, besonders bevorzugt als Silizium-Photodiode ausgebildet, um insbesondere die starken Intensitätsschwankungen, welche zwischen der Messung des Streulichts in Messposition und dem direkten Einfall des direkten von dem Lichtsender ausgesandten Lichtstrahls in der Prüfposition auftreten, zuverlässig detektieren zu können.

Bei einer vorteilhaften Weiterbildung der Erfindung ist das Fluid ein Gas, vorzugsweise Luft, so dass die Vorrichtung insbesondere in einem Sichtweitenmessgerät oder einem Branddetektor zur Anwendung kommen kann.

Vorzugsweise ist der Winkel zwischen der ersten optischen Achse und der zweiten optischen Achse derart ausgebildet, dass der Lichtdetektor die Vorwärtsstreuung des von dem Lichtsender ausgesandten Lichts an dem Fluid detektiert. Grundsätzlich ist es möglich, dieses Vorrichtung auch in Rückwärtsstreuung zu betreiben, wobei jedoch die Einrichtung, die nötig ist, um den Lichtempfänger aus der Prüfposition in die Messposition zu überführen, aufwendiger ist als bei einer in Vorwärtsstreuung betriebenen Vorrichtung.

Das Messvolumen kann prinzipiell den Bereich zwischen dem Lichtsender und dem Lichtempfänger umfassen. Vorzugsweise ist jedoch das Messvolumen durch eine Messzelle begrenzt, welche störende Umwelteinflüsse, beispielsweise Wind, abschirmen und zudem auch den Weg des Lichtstrahls nach außen hin abgrenzen, um die Umgebung beispielsweise vor einem Laserstrahl zu schützen. Vorzugsweise weist dazu die Messzelle eine Einfallsöffnung, durch welche der von dem Lichtsender ausgesandte Lichtstrahl in die Messzelle einfällt, und eine Austrittsöffnung auf, durch welche einerseits der von dem Lichtsender ausgesandte Lichtstrahl direkt hindurchtreten kann und andererseits das an dem in der Messzelle vorhandenen Fluid gestreute Licht in den Lichtdetektor in seiner Messposition fallen kann.

Das erfindungsgemäße Verfahren zur Überprüfung einer Empfangsoptik eines Lichtdetektors einer Vorrichtung zur Messung der Lichtstreuung an einem Fluid, wobei die Vorrichtung ein Lichtsender mit einer ersten optischen Achse und ein Lichtdetektor mit einer zweiten optischen Achse zur Detektion des an dem Fluid gestreuten Lichts aufweist, wobei der Detektor zur Messung der Lichtstreuung in einer Messposition derart angeordnet ist, dass die zweite optische Achse und die erste optische Achse im Winkel zueinander angeordnet sind, und wobei der Lichtdetektor in wenigstens eine Prüfposition verfahren werden kann, in welcher die erste optische Achse und die zweite optische Achse parallel zueinander verlaufen, zeichnet sich dadurch aus, dass der Lichtdetektor entlang einer Zwangskurve derart geführt verfahren wird, dass er in einen ersten Abschnitt der Zwangskurve zur Überprüfung der Empfangsoptik senkrecht zur ersten optischen Achse verfahren wird, wobei die zweite optische Achse parallel zur ersten optischen Achse in verläuft, und dass er in einem zweiten Abschnitt der Zwangskurve in die Messposition überführt werden kann.

Ein Ausführungsbeispiel der Erfindung wird anhand der folgenden Figuren ausführlich erläutert.

Es zeigt
- Fig. 1: eine schematische Darstellung einer Vorrichtung zur Messung der Lichtstreuung mit dem Lichtdetektor in der Messposition,
- Fig. 2: eine schematische Darstellung der Vorrichtung gemäß Figur 1 mit dem Lichtdetektor in der untersten Prüfposition und
- Fig. 3: eine schematische Darstellung der Vorrichtung gemäß Figur 1 mit dem Lichtdetektor in der obersten Prüfposition.

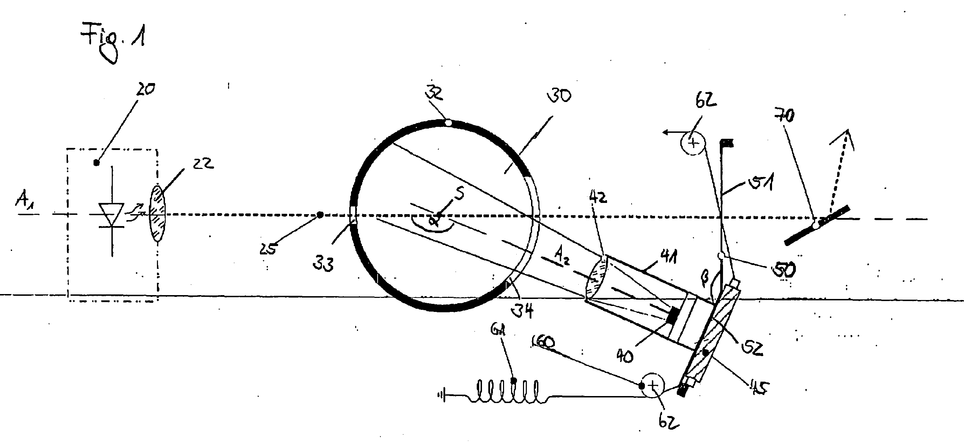

Die Figuren 1 bis 3 zeigen jeweils eine Vorrichtung 10 zur Messung der Lichtstreuung an einem Fluid mit einem Lichtsender 20 und einem Lichtdetektor 40, wobei der Lichtdetektor 40 in unterschiedlichen Positionen relativ zum Lichtsender 20 angeordnet ist. Gleiche Bezugsziffern bezeichnen in den Figuren 1 bis 3 jeweils gleiche Teile.

Der Lichtsender 20 weist eine Sendeoptik 22, beispielsweise bestehend aus einer Linse, auf, welche eine erste optische Achse A₁ definiert. Der Lichtsender 20 sendet einen Lichtstrahl 25 entlang der ersten optischen Achse A₁ aus, welcher in ein Messvolumen 30 eintritt.

Das Messvolumen 30 kann im Wesentlichen der Raum zwischen dem Lichtsender 20 und dem Lichtdetektor 40 sein, wird bei der vorliegenden Vorrichtung 10 jedoch durch eine Messzelle 32 begrenzt. Die Messzelle 32 dient dazu, Umwelteinflüsse wie beispielsweise starken Wind, abzuschirmen.
Damit der Lichtstrahl 25 in die Messzelle 32 eintreten kann, weist diese eine Eingangsöffnung 33 auf, welche dem Lichtsender 20 zugewandt ist und auf der ersten optischen Achse A₁ liegt. In dem Messvolumen wird der ausgesandte Lichtstrahl 25 an dem in der Messzelle 32 befindlichen Fluid gestreut. Dieses Fluid kann beispielsweise ein Gas, insbesondere auch Luft, sein, so dass die Vorrichtung 10 dazu verwendet werden kann, die Sichtweite zu bestimmen, oder beispielsweise auch als Branddetektor eingesetzt werden kann. Grundsätzlich kann das Fluid auch als Flüssigkeit ausgebildet sein, so dass in diesem Falle die Messzelle 32 so ausgebildet sein muss, dass sie die Flüssigkeit im Innern der Messzelle 32 hält, während die Wand der Messzelle 32 jedoch so ausgebildet ist, dass der Lichtstrahl 25 und das Streulicht die Wände der Messzelle 32 durchdringen können.

Der Lichtdetektor 40 ist bei der Darstellung gemäß Figur 1 in einer Messposition angeordnet, um die Lichtstreuung des von dem Lichtsender 20 ausgesandten Lichtstrahls 25 an dem in der Messzelle 32 angeordneten Fluid zu detektieren. Der Lichtdetektor 40 ist dabei in einem Gehäuse 41 angeordnet, welches durch eine Empfangsoptik 42, insbesondere eine Linse, abgeschlossen wird. Die Empfangsoptik 42 ist im Wesentlichen auf das Innere der Messzelle 32 fokussiert. Die Empfangsoptik 42 definiert eine zweite optische Achse A₂, welche, wenn der Lichtdetektor 40 in der Messposition angeordnet ist, in einem Winkel α zu der ersten optischen Achse A₁ des Lichtsenders 20 angeordnet ist. Die erste optische Achse A₁ und die zweite optische Achse A₂ schneiden sich dabei in einem Schnittpunkt S, der im Wesentlichen im Zentrum der Messzelle 32 liegt und auf welchen vorzugsweise die Empfangsoptik 42 fokussiert ist. Ist der Winkel α, so wie in Figur 1 gezeigt, deutlich größer als 90°, detektiert der Lichtdetektor 40 im Wesentlichen die Vorwärtsstreuung an dem Fluid. Grundsätzlich kann der Winkel α auch deutlich kleiner als 90° sein, so dass die Rückwärtsstreuung mit dem Lichtdetektor 40 detektiert wird.

Damit die gestreute Strahlung aus der Messzelle 32 austreten kann, weist diese eine Austrittsöffnung 34 auf, welche dem Detektor 40 zugewandt ist, welche jedoch deutlich größer als die Eingangsöffnung 33 ausgebildet ist, so dass einerseits sowohl das gestreute Licht in den Detektor 40 in seiner Messposition fallen als auch andererseits der von dem Lichtsender 20 ausgesandte Lichtstrahl 25 ungehindert die Messzelle 32 durchtreten kann.

Damit der Lichtdetektor 40 und die Empfangsoptik 42 überprüft werden kann, kann der Lichtdetektor 40 aus der Messposition herausbewegt werden. Dazu ist der Lichtdetektor 40 mit der Empfangsoptik 42 auf einem Schlitten 45 angeordnet, welcher sich entlang einer Zwangskurve 50 bewegen lässt. Die Zwangskurve 50 weist dabei einen ersten Abschnitt 51 und einen zweiten Abschnitt 52 auf, welche jeweils als Gerade ausgebildet sind, welche zueinander in einem Winkel β angeordnet sind, wobei der Winkel β dem Winkel α zwischen der ersten optischen Achse A₁ und der zweiten optischen Achse A₂ entspricht. In der Messposition befindet sich der Schlitten 45 mit dem Lichtdetektor 40 auf dem zweiten Abschnitt 52, welcher so relativ zu der Messzelle 32 ausgerichtet ist, dass in der Messposition die zweite optische Achse A₂ des Lichtdetektors 40 die Verlängerung eines Radiuses in der Messzelle 32 ist.

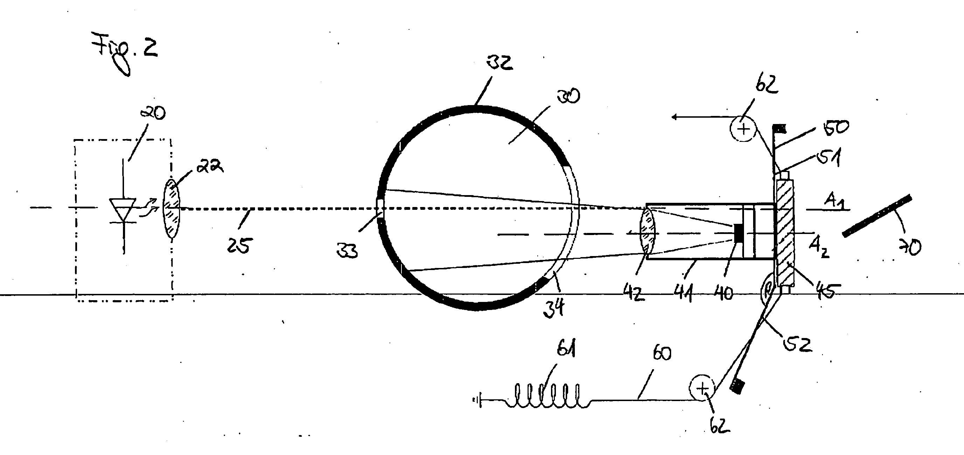

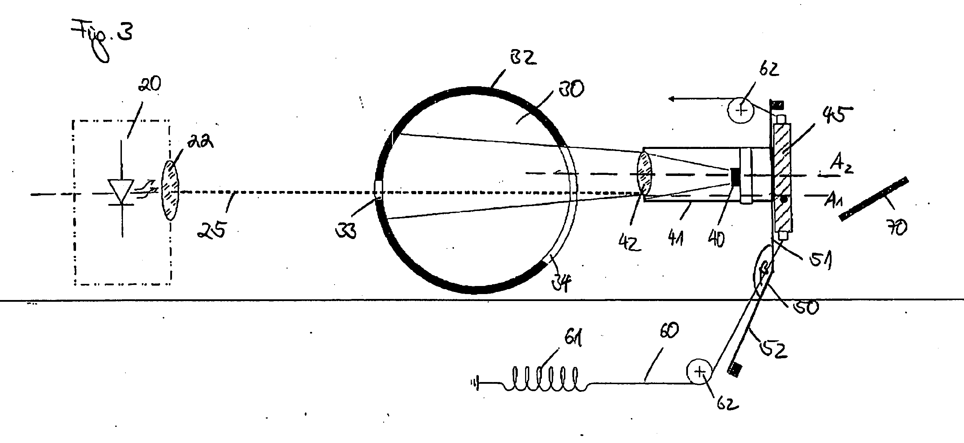

Der erste Abschnitt 51 der Zwangskurve 50 steht senkrecht zu der ersten optischen Achse A₁. Wird der Schlitten 45 entlang der Zwangskurve 50 von dem zweiten Abschnitt 52 auf den ersten Abschnitt 51 bewegt, befindet er sich zunächst in einer untersten Prüfposition, welche in Figur 2 dargestellt ist. In dieser Position steht der Schlitten 45 mit dem Lichtdetektor 40 bereits senkrecht zu der ersten optischen Achse A₁. Die zweite optische Achse A₂ des Lichtdetektors 40 verläuft dabei parallel, jedoch parallel versetzt, zu der ersten optischen Achse A₁. Der Schlitten 45 mit dem Lichtdetektor 40 ist dabei derart unterhalb der ersten optischen Achse A₁ angeordnet, dass der von dem Lichtsender 20 ausgesandte Lichtstrahl 25, welcher ungehindert durch die Messzelle 32 hindurchtritt, auf den oberen Rand der die Empfangsoptik 42 bildenden Linse fällt. Wird nun der Schlitten 45 mit dem Lichtdetektor 40 und der Empfangsoptik 42 über den ersten Abschnitt 51 der Zwangskurve 50 von unten nach oben bewegt, streicht der von dem Lichtsender 20 ausgesandte Lichtstrahl 25 von oben nach unten über die die Empfangsoptik 42 bildende Linse. Das auf die Empfangsoptik 42 einfallende Licht wird auf den Lichtdetektor 40 fokussiert und vorzugsweise mit einem Sollsignal verglichen, so dass aus der Abschwächung in der Empfangsoptik 42 auf eine Verschmutzung der Empfangsoptik 42 geschlossen werden kann. In Figur 3 befindet sich dann der Schlitten 45 mit dem Lichtdetektor 40 in der obersten Prüfposition, und der Lichtstrahl 25 fällt auf den unteren Rand der Empfangsoptik 42 und wird auf den Lichtdetektor 40 fokussiert. Der erste Abschnitt 51 weist somit wenigstens die Länge auf, die benötigt wird, um den Schlitten 45 soweit zu bewegen, dass der Lichtstrahl 25 die Empfangsoptik 42 vollständig, d. h. von Rand zu Rand, überstreichen kann.

Durch die Bewegung des Schlittens 45 mit dem Lichtdetektor 40 auf dem ersten Abschnitt 51 der Zwangskurve 50 wird der Schlitten 45 exakt senkrecht zu der ersten optischen Achse A₁ geführt, wobei die zweite optische Achse A₂ des Lichtdetektors 40 in jeder der Prüfpositionen auf dem ersten Abschnitt 51 exakt parallel zu der ersten optischen Achse A₁ steht und in genau einer Position mit der ersten optischen Achse A₁ zusammenfällt. Diese Geometrie ist wesentlich, um bei der Überprüfung der Empfangsoptik 42 auf Verschmutzungen keine fehlerhaften Ergebnisse durch schräg einfallendes Licht zu erhalten.

Der Schlitten 45 kann entgegen der Reibung über die Zwangskurve 50 bewegt werden. Vorzugsweise weist der Schlitten 45 jedoch nicht dargestellte Rollen auf, mit welchen er über die Zwangskurve 50 rollen kann, so dass die zur Bewegung des Schlittens 45 aufzubringende Kraft verringert wird.

Die Zwangskurve 50 kann beispielsweise als im Winkel β abgebogene Metallschiene ausgebildet sein, auf welcher der Schlitten 45 auf der der Messzelle 32 zugewandten Seite rollt. Die Zwangskurve 50 kann beispielsweise jedoch auch durch die Kanten zweier Gehäusewände gebildet werden, die in den Figuren 1 bis 3 jeweils vor und hinter der Papierebene liegen und die Verfahrmechanik für den Schlitten 45 tragen sowie ein Gehäuse für den Lichtdetektor 40 bilden. In dem Fall wäre die in den Figuren 1 bis 3 dargestellt Zwangskurve 50 nur die Projektion der entsprechenden Kanten der Seitenwänden in die Papierebene. In diesem Falle würde der Schlitten 45 auf der der Messzelle 32 abgewandten Seite der Zwangskurve 50 verfahren werden. Die Zwangskurve 50 kann alternativ auch als Nut in den Innenwänden der Seitenwände des Gehäuses für den Lichtdetektor 40 ausgebildet sein, in welche jeweils eine Seitenfläche oder entsprechende Vorsprünge des Schlittens 45 eingreifen, so dass der Schlitten 45 in den Nuten geführt verfahren werden kann.

Damit sichergestellt ist, dass der Schlitten 45 in jeder Position an der Zwangskurve 50 anliegt und somit in die entsprechende gewünschte Position verfahren wird, können Mittel vorgesehen sein, die den Schlitten 45 an die Innen- oder Außenseite der Zwangskurve 50 andrücken oder anziehen. Beispielsweise können derartige Mittel durch eine Druck- oder Zugfeder gebildet werden, die mit ihrem einen Ende an einem feststehenden Gehäuse und mit ihrem anderen Ende an dem Schlitten 45 befestigt sind, so dass auf den Schlitten 45 ein Druck oder Zug ausgeübt wird, welcher den Schlitten 45 an der Zwangskurve 50 hält.

Weiterhin können unterschiedliche Mechanismen vorgesehen sein, mit welchen der Schlitten 45 und der Lichtdetektor 40 entlang der Zwangskurve 50 bewegt werden kann.

Der Schlitten 45 kann beispielsweise wie in den Figuren 1 bis 3 dargestellt mit Hilfe eines Seilzugs 60, der über zwei Rollen 62 geführt ist, entlang der Zwangskurve 50 gezogen werden. Dabei kann der Seilzug 60 beispielsweise derart ausgebildet sein, dass er den Schlitten 45 in den Figuren 1 bis 3 aus der Messposition in die unterste Prüfposition und anschließend in die oberste Prüfposition zieht, während die Rückführung des Schlittens 45 aus der obersten Prüfposition über den unterste Prüfposition zurück in die Messposition, mit Hilfe einer Feder 61 erfolgt, die bei Bewegung des Schlittens aus der Messposition über die unterste Prüfposition in die oberste Prüfposition gespannt wird und somit, sobald keine Kraft mehr auf den Seilzug 60 wirkt, den Schlitten 45 aus der obersten Prüfposition über die unterste Prüfposition in die Messposition zurückzieht.

Alternativ kann die Bewegung des Schlittens 45 mit Hilfe eines Riemenantriebs erfolgen, welcher ebenfalls über beispielsweise die Rollen 62 geführt ist und mit Hilfe eines Motors angetrieben werden kann. Dabei können, sofern zwei Zwangskurven 50 seitlich zu der ersten optischen Achse A₁ angeordnet ist, auch zwei seitlich versetzte Riemenantriebe vorgesehen sein, die den Schlitten 45 an seinen Längsseiten greifen und somit eine zuverlässige Führung und Bewegung ermöglichen.

Um zu verhindern, dass das von dem Lichtsender 20 ausgesandte Licht 25 ungeschützt in die Umgebung entweicht, wenn der Lichtdetektor 40 in der Messposition angeordnet ist, ist ausgehend von dem Lichtsender 20 hinter dem Lichtdetektor 40 auf der ersten optischen Achse A₁ eine sogenannte Lichtfalle 70 angeordnet, welche das auf die Lichtfalle 70 auftreffende Licht absorbiert.

Der Lichtsender 20 ist vorzugsweise als Laser ausgebildet, um einen intensiven und gebündelten Lichtstrahl 25 erzeugen zu können. Der Lichtdetektor 40 ist vorzugsweise als Photodiode, insbesondere als Siliziumphotodiode ausgebildet, um insbesondere die starken Intensitätsschwankungen, die zwischen der Messposition, in welcher lediglich Streulicht detektiert wird, und den Prüfpositionen, in welchen der von dem Lichtsender 20 ausgesandte Lichtstrahl 25 nahezu ungehindert auf den Lichtdetektor 40 auftrifft, zuverlässig detektieren zu können.

Die Überprüfung des Lichtdetektors 40 und der Empfangsoptik 42 durch Bewegung des Schlittens 45 in den ersten Abschnitt 51 der Zwangskurve 50 wird durchgeführt, um Verschmutzungen der Empfangsoptik 42 durch Vergleich des auftreffenden Intentsitätssignals mit einem Sollsignal bei unverschmutzter Empfangsoptik 42 feststellen und die von dem Lichtdetektor 40 in der Messposition detektierten Signale des Streulichts auch bei noch leicht verschmutzter Empfangsoptik 42 korrekt auswerten zu können, um auf die entsprechende Sichtweite bzw. Sichttrübung schließen zu können. Dazu sollte die Prüfung in regelmäßigen Abständen, beispielsweise einmal pro Tag, durchgeführt werden, wozu vorzugsweise auch automatisiert der Lichtdetektor 40 auf den ersten Abschnitt 51 der Zwangskurve 50 verfahren wird. Dazu weist die Vorrichtung 10 vorzugsweise eine nicht dargestellte Steuer- und Auswerteeinheit auf, welche einerseits die von dem Lichtdetektor 40 detektierten Signale auswertet, auszeichnet und gegebenenfalls entsprechende Alarmsignale auslöst, andererseits jedoch das Verfahren des Lichtdetektors 40 in die Prüfposition in regelmäßigen Abständen steuert.

### Bezugszeichenliste

- 10: Vorrichtung

- 20: Lichtsender
- 22: Sendeoptik
- 25: ausgesandter Lichtstrahl

- 30: Messvolumen.
- 32: Messzelle
- 33: Eingangsöffnung
- 34: Austrittsöffnung

- 40: Lichtdetektor
- 41: Gehäuse
- 42: Empfangsoptik
- 45: Schlitten

- 50: Zwangskurve
- 51: erster Abschnitt
- 52: zweiter Abschnitt

- 60: Seilzug
- 61: Feder
- 62: Rolle

- 70: Lichtfalle

- A₁: erste optische Achse
- A₂: zweite optische Achse
- S: Schnittpunkt
- α: Winkel
- β: Winkel

## Patentansprüche

1. Vorrichtung (10) zur Messung der Lichtstreuung an einem Fluid mit einem Lichtsender (20) mit einer ersten optischen Achse (A₁), einem Messvolumen (30), in den der von dem Lichtsender (20) ausgesandte Lichtstrahl (25) einfällt, und einem Lichtdetektor (40) mit einer zweiten optischen Achse (A₂) zur Detektion des in dem Messvolumen (30) an dem Fluid gestreuten Lichts, wobei der Lichtdetektor (40) zur Messung der Lichtstreuung in einer Messposition derart angeordnet ist, dass die zweite optische Achse (A₂) und die erste optische Achse (A₁) im Winkel (α) zueinander angeordnet sind, wobei sich die erste optische Achse (A₁) und die zweite optische Achse (A₂) in dem Messvolumen (30) in einem Schnittpunkt (S) schneiden, und wobei der Lichtdetektor (40) in wenigstens eine Prüfposition verfahrbar ist, in welcher die erste optische Achse (A₁) und die zweite optische Achse (A₂) parallel zueinander verlaufen,
**dadurch gekennzeichnet, dass** eine Zwangskurve (50) mit einem ersten Abschnitt (51) und einem zweiten Abschnitt (52) vorgesehen ist, die die Bewegung des Lichtdetektors (40) festlegt, entlang derer der Lichtdetektor (40) derart geführt ist, dass er in dem ersten Abschnitt (51) der Zwangskurve (50) senkrecht zur ersten optischen Achse (A₁) verfahrbar ist, wobei die zweite optische Achse (A₂) parallel zur ersten optischen Achse (A₁) verläuft, und dass er in dem zweiten Abschnitt (52) der Zwangskurve (50) in die Messposition überführbar ist, wobei der Lichtdetektor (40) eine Empfangsoptik (42) aufweist und der erste Abschnitt (51) der Zwangskurve (50) eine derartige Länge aufweist, dass der Lichtdetektor (40) entlang dem ersten Abschnitt (51) derart senkrecht zu der ersten optischen Achse (A₁) verfahrbar ist, dass beim Verfahren der von dem Lichtsender (20) ausgesandte Lichtstrahl (25) einen Durchmesser der Empfangsoptik (42) des Lichtdetektors (40) vollständig überstreichen kann.

2. Vorrichtung nach Anspruch 1,
**dadurch gekennzeichnet, dass** der erste Abschnitt (51) der Zwangskurve (50) und der zweite Abschnitt (52) der Zwangskurve (50) als Geraden ausgebildet sind, welche in einem Winkel (β) zueinander stehen, der vorzugsweise dem Winkel (α) zwischen der ersten optischen Achse (A₁) und der zweiten optischen Achse (A₂) in der Messposition entspricht.

3. Vorrichtung nach einem der vorhergehenden Ansprüche,
**dadurch gekennzeichnet, dass** die Empfangsoptik (42) auf das Messvolumen (30), vorzugsweise auf den Schnittpunkt (S) zwischen der ersten optischen Achse (A₁) und der zweiten optischen Achse (A₂) in der Messposition, fokussiert ist.

4. Vorrichtung nach einem der vorhergehenden Ansprüche,
**dadurch gekennzeichnet, dass** Mittel vorgesehen sind, welche den Lichtdetektor (40) an die Zwangskurve (50) andrücken oder heranziehen.

5. Vorrichtung nach Anspruch 4,
**dadurch gekennzeichnet, dass** die Mittel als Zug- oder Druckfeder ausgebildet sind.

6. Vorrichtung nach einem der vorhergehenden Ansprüche,
**dadurch gekennzeichnet, dass** der Lichtdetektor (40) auf einem Schlitten (45) angeordnet ist, welcher entlang der Zwangskurve (50) verschiebbar oder verfahrbar ist.

7. Vorrichtung nach Anspruch 6,
**dadurch gekennzeichnet, dass** der Schlitten (45) Rollen aufweist.

8. Vorrichtung nach einem der vorhergehenden Ansprüche,
**dadurch gekennzeichnet, dass** der Lichtdetektor (40) mittels eines Riemenantriebs oder eines Seilzugs (60) entlang der Zwangskurve (50) bewegbar ist.

9. Vorrichtung nach einem der vorhergehenden Ansprüche,
**dadurch gekennzeichnet, dass** der Lichtsender (20) als Laser ausgebildet ist.

10. Vorrichtung nach einem der vorhergehenden Ansprüche,
**dadurch gekennzeichnet, dass** der Lichtdetektor (40) als Photodiode, vorzugsweise als Silizium-Photodiode, ausgebildet ist.

11. Vorrichtung nach einem der vorhergehenden Ansprüche,
**dadurch gekennzeichnet, dass** das Fluid ein Gas, vorzugsweise Luft, ist.

12. Vorrichtung nach einem der vorhergehenden Ansprüche,
**dadurch gekennzeichnet, dass** der Winkel (α) zwischen der ersten optischen Achse (A₁) und der zweiten optischen Achse (A₂) in der Messposition derart ausgebildet ist, dass der Lichtdetektor (40) die Vorwärtsstreuung des von dem Lichtsender (20) ausgesandten Lichts an dem Fluid detektiert.

13. Vorrichtung nach einem der vorhergehenden Ansprüche,
**dadurch gekennzeichnet, dass** das Messvolumen (30) durch eine Messzelle (32) begrenzt ist.

14. Verwendung einer Vorrichtung (10) gemäß einem der vorhergehenden Ansprüche in einem Sichtweitenmessgerät oder einem Branddetektor.

15. Verfahren zur Überprüfung eines Lichtdetektors (40) einer Vorrichtung (10) zur Messung der Lichtstreuung an einem Fluid, wobei die Vorrichtung (10) einen Lichtsender (20) mit einer ersten optischen Achse (A₁) und den Lichtdetektor (40) mit einer zweiten optischen Achse (A₂) zur Detektion des an dem Fluid gestreuten Lichts aufweist, wobei der Lichtdetektor (40) zur Messung der Lichtstreuung in einer Messposition derart angeordnet ist, dass die zweite optische Achse (A₂) und die erste optische Achse (A₁) im Winkel (α) zueinander angeordnet sind, und wobei der Lichtdetektor (40) in wenigstens eine Prüfposition verfahren werden kann, in welcher die erste optische Achse (A₁) und die zweite optische Achse (A₂) parallel zueinander verlaufen,
**dadurch gekennzeichnet, dass** der Lichtdetektor (40) entlang einer Zwangskurve (50) derart geführt verfahren wird, dass er in einem ersten Abschnitt (51) der Zwangskurve (50) zur Überprüfung des Lichtdetektors (40) senkrecht zur ersten optischen Achse (A₁) verfahren wird, wobei die zweite optische Achse (A₂) parallel zur ersten optischen Achse (A₁) verläuft, und dass er in einem zweiten Abschnitt (52) der Zwangskurve (50) in die Messposition überführt werden kann, wobei der Lichtdetektor (40) eine Empfangsoptik (42) aufweist und der erste Abschnitt (51) der Zwangskurve (50) eine derartige Länge aufweist, dass der Lichtdetektor (40) entlang dem ersten Abschnitt (51) derart senkrecht zu der ersten optischen Achse (A₁) verfahren werden kann, dass beim Verfahren der von dem Lichtsender (20) ausgesandte Lichtstrahl (25) einen Durchmesser der Empfangsoptik (42) des Lichtdetektors (40) vollständig überstreichen kann.

## Claims

1. A device (10) for measuring light dispersion on a fluid, comprising a light emitter (20) having a first optical axis (A₁), a measurement volume (30) in which the light beam (25) emitted by the light emitter (20) is incident, and a light detector (40) having a second optical axis (A₂) for detecting the light dispersed on the fluid in the measurement volume (30), said light detector (40) being arranged in a measurement position for measuring light dispersion in such a way that the second optical axis (A₂) and the first optical axis (A₁) are disposed at an angle (α) relative to each other, said first optical axis (A₁) and said second optical axis (A₂) intersecting in the measurement volume (30) in a point of intersection (S), and said light detector (40) being movable into at least one checking position in which the first optical axis (A₁) and the second optical axis (A₂) extend parallel to each other,
**characterised in that** a forced bend (50) having a first section (51) and a second section (52) is provided, which bend establishes the travel path of the light detector (40), along which the light detector (40) is guided in such a way that it can be moved vertically to the first optical axis (A₁) in the first section (51) of the forced bend (50), said second optical axis (A₂) extending parallel to the first optical axis (A₁), and that it can be transferred into the measurement position in the second section (52) of the forced bend (50), said light detector (40) having receiving optics (42) and the first section (51) of the forced bend (50) having a length such that the light detector (40) can be moved along the first section (51) vertically to the first optical axis (A₁) in such a way that the light beam (25) emitted by the light emitter (20) during movement can completely sweep a diameter of the receiving optics (42) of the light detector (40).

2. The device as claimed in Claim 1, **characterised in that** the first section (51) of the forced bend (50) and the second section (52) of the forced bend (50) are formed as straight lines forming an angle (β) relative to one another, which preferably corresponds to the angle (α) between the first optical axis (A₁) and the second optical axis (A₂) in the measurement position.

3. The device as claimed in any one of the preceding claims, **characterised in that** the receiving optics (42) is focussed onto the measurement volume (30), preferably onto the point of intersection (S) between the first optical axis (A₁) and the second optical axis (A₂) in the measurement position.

4. The device as claimed in any one of the preceding claims, **characterised in that** means are provided which press or attract the light detector (40) against the forced bend (50).

5. The device as claimed in Claim 4, **characterised in that** the means are formed as a tension spring or a compression spring.

6. The device as claimed in any one of the preceding claims, **characterised in that** the light detector (40) is mounted on a carriage (45) that can be displaced or traversed along the forced bend (50).

7. The device as claimed in Claim 6, **characterised in that** the carriage (45) has rollers.

8. The device as claimed in any one of the preceding claims, **characterised in that** the light detector (40) can be moved along the forced bend (50) by means of a belt drive or a cable hoist (60).

9. The device as claimed in any one of the preceding claims, **characterised in that** the light emitter (20) is formed as a laser.

10. The device as claimed in any one of the preceding claims, **characterised in that** the light detector (40) is formed as a photodiode, preferably a silicon photodiode.

11. The device as claimed in any one of the preceding claims, **characterised in that** the fluid is a gas, preferably air.

12. The device as claimed in any one of the preceding claims, **characterised in that** the angle (α) between the first optical axis (A₁) and the second optical axis (A₂) in the measurement position is formed such that the light detector (40) detects the forward dispersion of the light emitted by the light emitter (20) on the fluid.

13. The device as claimed in any one of the preceding claims, **characterised in that** the measurement volume (30) is limited by a measuring cell (32).

14. The use of a device (10) as claimed in any one of the preceding claims in a visual range measuring device or in a fire detector.

15. A method for checking a light detector (40) of a device (10) for measuring light dispersion on a fluid, said device (10) comprising a light emitter (20) with a first optical axis (A₁) and said light detector (40) with a second optical axis (A₂) for detecting the light dispersed on the fluid, said light detector (40) being arranged in a measurement position for measuring light dispersion in such a way that the second optical axis (A₂) and the first optical axis (A₁) are disposed at an angle (α) relative to each other, said light detector (40) being movable into at least one checking position in which the first optical axis (A₁) and the second optical axis (A₂) extend parallel to each other,
**characterised in that** said light detector (40) is moved in a guided manner along a forced bend (50) in such a way that it is moved vertically to the first optical axis (A₁) in a first section (51) of the forced bend (50) for checking said light detector (40), with said second optical axis (A₂) extending parallel to the first optical axis (R₁), and that it can be transferred into the measurement position in a second section (52) of the forced bend (50), said light detector (40) having receiving optics (42) and the first section (51) of the forced bend (50) having a length such that the light detector (40) can be moved along the first section (51) vertically to the first optical axis (A₁) in such a way that the light beam (25) emitted by the light emitter (20) during movement can completely sweep a diameter of the receiving optics (42) of the light detector (40).

## Revendications

1. Dispositif (10) de mesure de la diffusion lumineuse dans un fluide comprenant un photoémetteur (20) ayant un premier axe optique (A₁), un volume de mesure (30) dans lequel arrive le faisceau lumineux (25) émis par le photoémetteur (20) ainsi qu'un photo-détecteur (40) ayant un second axe optique (A₂) pour détecter la lumière diffusée par le fluide du volume de mesure (30),
* le photo-détecteur (40) étant installé dans une position de mesure pour mesurer la diffusion lumineuse de façon que le second axe optique (A₂) et le premier axe optique (A₁) fassent entre eux un angle (α),
* le premier axe optique (A₁) et le second axe optique (A₂) se coupant dans le volume de mesure (30) en un point d'intersection (S), et
* le photo-détecteur (40) peut être déplacé dans au moins une position de contrôle dans laquelle le premier axe optique (A₁) et le second axe optique (A₂) sont parallèles,
dispositif **caractérisé par**
une courbe forcée (50) comportant un premier segment (51) et un second segment (52) définissant le mouvement du photo-détecteur (40), courbe le long de laquelle le photo-détecteur (40) est guidé de façon que,
- dans le premier segment (51) de la courbe forcée (50), il soit mobile perpendiculairement au premier axe optique (A₁),
* le second axe optique (A₂) étant parallèle au premier axe optique (A₁), et
- dans le second segment (52) de la courbe forcée (50), il puisse être mis dans la position de mesure,
* le photo-détecteur (40) ayant une optique de réception (42) et le premier segment (51) de la courbe forcée (50) ayant une longueur telle que le photo-détecteur (40) puisse être déplacé le long du premier segment (51) perpendiculairement au premier axe optique (A₁) de façon que le faisceau lumineux (25) émis par le photoémetteur (20) en mouvement, puisse balayer complètement le diamètre de l'optique de réception (42) du photo-détecteur (40).

2. Dispositif selon la revendication 1,
**caractérisé en ce que**
le premier segment (51) de la courbe forcée (50) et le second segment (52) de la courbe forcée (50) sont des droites faisant entre elles un angle (β) qui correspond de préférence à l'angle (α) entre le premier axe optique (A₁) et le second axe optique (A₂) dans la position de mesure.

3. Dispositif selon l'une des revendications précédentes,
**caractérisé en ce que**
l'optique de réception (42) est focalisée sur le volume de mesure (30), de préférence sur le point d'intersection (S) du premier axe optique (A₁) et du second axe optique (A₂) en position de mesure.

4. Dispositif selon l'une des revendications précédentes,
**caractérisé par**
des moyens pour presser ou tirer le photo-détecteur (40) contre la courbe forcée (50).

5. Dispositif selon la revendication 4,
**caractérisé en ce que**
les moyens sont constitués par un ressort de traction ou de compression.

6. Dispositif selon l'une des revendications précédentes,
**caractérisé en ce que**
le photo-détecteur (40) est installé sur un chariot (45) coulissant ou mobile le long de la courbe forcée (50).

7. Dispositif selon la revendication 6,
**caractérisé en ce que**
le chariot (45) comporte des galets.

8. Dispositif selon l'une des revendications précédentes,
**caractérisé en ce que**
le photo-détecteur (40) est déplacé le long de la courbe forcée (50) par un entraînement à courroie ou un câble de traction (60).

9. Dispositif selon l'une des revendications précédentes,
**caractérisé en ce que**
le photoémetteur (20) est un laser.

10. Dispositif selon l'une des revendications précédentes,
**caractérisé en ce que**
le photo-détecteur (40) est une photo-diode, de préférence une photo diode au silicium.

11. Dispositif selon l'une des revendications précédentes,
**caractérisé en ce que**
le fluide est un gaz, de préférence de l'air.

12. Dispositif selon l'une des revendications précédentes,
**caractérisé en ce que**
l'angle (α) entre le premier axe optique (A₁) et le second axe optique (A₂) en position de mesure est tel que le photo-détecteur (40) détecte la diffusion avant du faisceau lumineux émis par le photoémetteur (20) dans le fluide.

13. Dispositif selon l'une des revendications précédentes,
**caractérisé en ce que**
le volume de mesure (30) est délimité par une cellule de mesure (32).

14. Application d'un dispositif (10) selon l'une des revendications précédentes, à un appareil de mesure de la portée de vision ou d'un détecteur d'incendie.

15. Procédé de contrôle d'un photo-détecteur (40) d'un dispositif (10) servant à mesurer la diffusion lumineuse d'un fluide,
* le dispositif (10) ayant un photoémetteur (20) avec un premier axe optique (A₁) et un photo-détecteur (40) ayant un second axe optique (A₂) pour détecter la lumière diffusée par le fluide,
* le photo-détecteur (40) étant installé dans une position de mesure pour mesurer la diffusion lumineuse de façon que le second axe optique (A₂) et le premier axe optique (A₁) fassent un angle (α), et
* le photo-détecteur (40) est déplaçable dans au moins une position de contrôle dans laquelle le premier axe optique (A₁) et le second axe optique (A₂) sont parallèles,
procédé **caractérisé en ce que**
le photo-détecteur (40) est guidé le long d'une courbe forcée (50) de façon que,
- sur un premier segment (51) de la courbe forcée (50), il soit déplacé perpendiculairement au premier axe optique (A₁) pour contrôler le photo-détecteur (40),
* le second axe optique (A₂) étant parallèle au premier axe optique (A₁), et
- dans un second segment (52) de la courbe forcée (50), il soit mis dans une position de mesure,
* le photo-détecteur (40) ayant une optique de réception (42) et le premier segment (51) de la courbe forcée (50) ayant une longueur telle que le photo-détecteur (40) soit déplacé le long du premier segment (51), perpendiculairement au premier axe optique (A₁) de façon qu'au déplacement du faisceau lumineux (25) émis par le photoémetteur (20), il puisse balayer complètement le diamètre de l'optique de réception (42) du photo-détecteur (40),
